# DEMANDE DE BREVET EUROPEEN

(11) **EP 2 541 753 A2**
(43) Date de publication de la demande: **02.01.2013**
(21) Numéro de dépôt: 12174224.1
(22) Date de dépôt: 28.06.2012
(51) Int. Cl.: H02N 11/00

(54) **Convertisseur électromécanique destiné à produire de l'électricité et centrale de production d'énergie électrique**

(30) Priorité: 29.06.2011 FR 1155798
(71) Demandeur: Moura, Andre, 65100 Fourdes (FR)
(72) Inventeur: Moura, Andre, 65100 Fourdes (FR)
(74) Mandataire: Fragnaud, Aude

(57) **Abrégé**

L'invention se rapporte à un convertisseur (10) électromécanique destiné à produire de l'électricité. Il comprend au moins un actuateur piézoélectrique (17) à la surface duquel est appliquée une pression statique permanente. L'application de cette pression statique permanente sur la surface d'un actuateur piézoélectrique permet de disposer d'un appareil de production d'électricité par conversion piézoélectrique, ne nécessitant aucun apport extérieur d'énergie cinétique. L'invention se rapporte en outre à une centrale de production d'énergie électrique ou source d'énergie électrique, comprenant au moins un convertisseur électromécanique. La centrale et le convertisseur présentent l'avantage d'être peu encombrants, simples à réaliser et peu onéreux ; avantageusement, l'invention peut être mise en oeuvre dans tout type de système tournant où le travail du poids que subit l'élément tournant est exploité afin d'appliquer une masse sur les vérins tel que une roue de voiture ou de train, ou encore un moyeu d'une éolienne.

## Description

La présente invention concerne le domaine de la production d'énergie électrique, à des fins industrielles ou domestiques.

L'invention se rapporte plus particulièrement à un convertisseur électromécanique apte à produire de l'électricité et à une centrale de production d'énergie électrique ou source d'alimentation électrique, comprenant au moins un tel convertisseur, afin de produire de l'énergie électrique destinée à un usage industriel ou domestique.

L'invention s'applique avantageusement à tout système tournant comme une roue de voiture ou de train, ou encore un moyeu d'une éolienne.

Dans le contexte environnemental actuel, où les énergies fossiles tendent à s'épuiser et à devenir de plus en plus coûteuses, des solutions alternatives de production d'énergie électrique ont déjà été étudiées. Il existe notamment des solutions basées sur les énergies renouvelables, telles que par exemple l'énergie éolienne, l'énergie hydroélectrique ou encore l'énergie photovoltaïque. Ces solutions, bien que prometteuses, ne permettent pas, à l'heure actuelle, de transporter l'énergie produite sur de longues distances afin d'alimenter en énergie des villes éloignées. Or, ces solutions impliquent des infrastructures qui peuvent s'étendre sur plusieurs milliers d'hectares pour pouvoir alimenter une grande agglomération, si bien qu'il s'avère difficile d'implanter de telles infrastructures autour des grandes villes, par manque de place. De plus, le coût de ces infrastructures est très élevé. De même, il existe de très petites installations qui ont été mises au point pour les particuliers, en vue d'une production pour leurs besoins propres, mais ces installations restent encore trop coûteuses.

La piézoélectricité est la propriété que possèdent certains corps de se polariser électriquement sous l'action d'une contrainte mécanique, c'est ce que l'on appelle communément l'effet piézoélectrique direct. Réciproquement ces mêmes corps présentent la propriété de se déformer lorsqu'on leur applique un champ électrique, c'est ce que l'on appelle communément l'effet piézoélectrique inverse.

Les applications de l'effet piézoélectrique sont nombreuses. Parmi ces applications on peut par exemple citer les transducteurs acoustiques utilisés dans les microphones ou dans les haut-parleurs par exemple, les résonateurs piézoélectriques utilisés dans les montres ou les microbalances par exemple, ou encore les capteurs de pression ou d'accélération. Ces applications se basent sur l'effet piézoélectrique direct. D'autres applications, telles que les actionneurs, utilisés dans les microscopes à balayage par exemple, et les moteurs piézoélectriques, utilisés dans les systèmes autofocus d'appareil photo par exemple, tirent profit de l'effet piézoélectrique inverse. La piézoélectricité est également appliquée pour la réalisation de transformateurs ou de micro-générateurs piézoélectriques par exemple.

Les micro-générateurs piézoélectriques en particulier sont des techniques émergentes qui ont été mises au point récemment, dans les années 2000. Ils consistent à récupérer l'énergie mécanique fournie par la pression d'un doigt, lorsqu'on appuie sur le bouton d'une sonnette par exemple, ou d'un pied, lorsqu'on marche par exemple, afin de produire des énergies électriques de faible puissance, suffisantes pour alimenter un dispositif électronique. A terme, ces micro-générateurs sont destinés à remplacer les piles, comprenant des matériaux polluants, pour des applications nécessitant un apport extérieur d'énergie cinétique.

Les applications connues de l'effet piézoélectrique direct ne permettent cependant pas, pour le moment, de produire de l'électricité en continu, sans apport extérieur d'énergie mécanique cinétique.

L'invention a donc pour but de remédier à au moins un des inconvénients de l'art antérieur. L'invention vise notamment à permettre la production d'énergie électrique en continu, à des fins industrielles ou domestiques, en se basant sur l'effet piézoélectrique direct.

A cet effet, l'invention a pour objet un convertisseur électromécanique apte à produire de l'électricité, principalement **caractérisé en ce qu'**il comprend au moins un actuateur piézoélectrique à la surface duquel est appliquée une pression statique permanente.

Ainsi, l'application d'une pression statique permanente sur la surface d'un actuateur piézoélectrique permet de disposer d'un appareil de production d'électricité par conversion piézoélectrique, ne nécessitant aucun apport extérieur d'énergie cinétique. Un tel convertisseur est, de plus, simple à réaliser, peu encombrant et peu onéreux.

Selon d'autres caractéristiques optionnelles du convertisseur :
- le convertisseur comprend en outre au moins un dispositif de pression mécanique apte à appliquer ladite pression statique permanente sur ledit au moins un actuateur piézoélectrique,
- le dispositif de pression mécanique comprend au moins un vérin hydraulique et au moins une masse,
- le vérin hydraulique comprend un premier piston sur lequel s'appuie la masse, et un deuxième piston, séparé du premier piston par une chambre hydraulique, ledit deuxième piston étant apte à appliquer ladite pression statique permanente sur la surface dudit au moins un actuateur, du fait de la force du poids de la masse appliquée sur ledit premier piston et transmise audit deuxième piston via ladite chambre hydraulique,
- le deuxième piston dudit vérin hydraulique présente une surface de section droite plus grande que la surface de la section droite du premier piston, afin de démultiplier la force du poids de la masse appliquée sur ledit premier piston. le poids de la masse appliquée sur ledit premier piston est de l'ordre de quelques kilogrammes, et de préférence compris entre 1 et 8 kg, le convertisseur comporte plusieurs actuateurs, lesdits actuateurs étant montés en série,
- pour l'obtention d'un contact permanent optimal, on utilise de préférence un actuateur par vérin,
- le convertisseur comprend un ou plusieurs actuateur(s) piézoélectrique(s) par vérin hydraulique,
- le convertisseur comprend en outre un circuit de mesure apte à mesurer la tension ou la puissance produite en sortie du convertisseur,
- le circuit de mesure comprend en outre un interrupteur électronique fonctionnant en mode hacheur haute fréquence, de manière à engendrer des vibrations de la surface dudit au moins un actuateur en contact avec ledit deuxième piston dudit au moins un vérin hydraulique et à obtenir une puissance électrique en sortie dudit au moins un actuateur au moins égale à 300W.
- l'invention porte en outre sur une centrale de production d'énergie électrique ou source d'énergie électrique à des fins industrielles ou domestiques, comprenant au moins 10 convertisseurs tel que décrit ci-dessus, montés en série, afin de délivrer une tension électrique continue avec une puissance d'au moins 3000 W.
- un ou plusieurs convertisseurs selon l'invention peuvent être placés avantageusement sur tout système tournant comme une roue de voiture ou de train, ou encore un moyeu d'une éolienne, comportant.
- D'autres avantages et caractéristiques de l'invention apparaîtront à la lecture de la description suivante faite à titre d'exemple illustratif et non limitatif, en référence aux figures annexées qui représentent :
   - La figure 1, un schéma d'une vue de face en coupe d'un convertisseur électromécanique selon l'invention,
   - La figure 2, un schéma d'une vue de dessous du convertisseur de la figure 1,
   - La figure 3, un autre schéma d'une vue de dessous du convertisseur de la figure 1, comprenant un circuit électrique de mesure différent de celui de la figure 2,
   - La figure 4, un schéma de l'interface multipoints vérin /actuateur au repos et en phase de vibration,
   - La figure 5, un schéma du modèle mécanique équivalent du fonctionnement de l'actuateur selon le schéma de la figure 4.

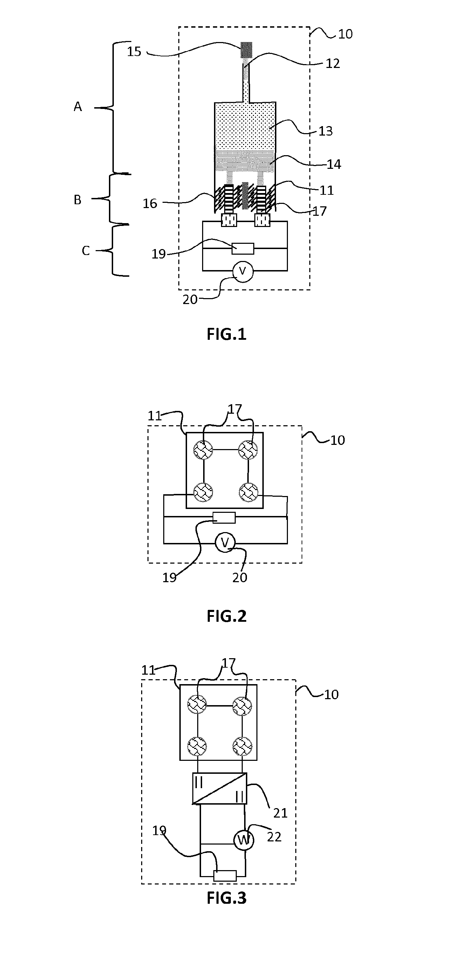

Les figures 1 et 2 représentent respectivement des coupes schématiques de face et de dessous d'un convertisseur 10 électromécanique apte à produire de l'électricité en se basant sur l'effet piézoélectrique direct.

Pour cela, le fonctionnement du convertisseur repose sur l'application d'une pression statique permanente sur la surface d'au moins un actuateur piézoélectrique 17, de manière à produire une tension électrique continue, sans avoir recours à un apport extérieur d'énergie cinétique.

Le convertisseur comprend trois zones. Une première zone référencée A, dite zone mécanique, comprend une partie mécanique destinée à appliquer la pression statique permanente sur la surface d'au moins un actuateur piézoélectrique. Une deuxième zone référencée B, dite zone électrique, comprend une partie électrique destinée à convertir la pression statique appliquée en énergie électrique. Enfin, une troisième zone référencée C, dite zone de mesure, comprend un circuit électrique de mesure destiné notamment à mesurer la tension électrique produite par le convertisseur électromécanique (figure 2) ou la puissance délivrée par le convertisseur électromécanique (figure 3).

La partie mécanique comprend avantageusement au moins un vérin hydraulique 11 destiné à appliquer la pression statique permanente. Ce vérin comprend un premier piston 12, dit piston extérieur, et un deuxième piston 14, dit piston intérieur. Ces deux pistons 12, 14 sont séparés l'un de l'autre par une chambre hydraulique 13 remplie de fluide hydraulique. Ce fluide hydraulique peut par exemple être de l'eau.

Une masse 15 appuie en permanence sur le premier piston 12 extérieur. Cette masse, d'un poids de quelques kilogrammes, par exemple d'un poids compris entre 1 et 8 kg, permet d'appliquer en permanence une pression sur le premier piston 12. Cette pression est ensuite démultipliée, par l'effet de la pression hydraulique exercée par la chambre hydraulique 13, et transmise au deuxième piston intérieur 14. Plus la masse est petite, et donc de petit poids, plus la démultiplication de la force appliquée par le vérin est grande et plus les dimensions du convertisseur présentent un encombrement réduit.

Plus le rapport des surfaces des sections droites des pistons extérieur 14 et intérieur 12 est grand, plus la force de compression appliquée par le piston intérieur 14 à la surface de l' (des) actuateur(s) 17 est démultipliée et devient grande. De même, plus la force de compression appliquée en permanence sur l' (les) actuateur(s) est grande et plus la tension continue produite par l'actuateur piézoélectrique 17 est élevée.

De préférence, le convertisseur comprend plus d'un actuateur piézoélectrique 17 afin de produire une plus grande tension continue à ses bornes. Dans l'exemple illustré sur les figures 1 et 2, le convertisseur représenté compte 4 actuateurs piézoélectriques 17. Cependant, le convertisseur peut en compter plus ou moins, tout dépend ensuite de ses dimensions et des dimensions du vérin hydraulique utilisé, ainsi que de l'usage auquel il est destiné. De préférence, lorsqu'il y a plusieurs actuateurs, ils sont montés en série tel qu'illustré sur la figure 2.

Dans l'exemple illustré sur les figures 1 et 2, le rapport entre les surfaces des sections droites des pistons intérieur 14 et extérieur 12 est de l'ordre de 100, c'est-à-dire que la surface de la section droite du piston intérieur 14 est 100 fois plus grande que la surface de la section droite du piston extérieur 12. Dans ce cas, une masse appliquée sur le piston extérieur 12, d'un poids de 4 kg par exemple, permet de produire une force additionnelle permanente de compression de 975N sur chacun des 4 actuateurs piézoélectriques montés en série. Chacun de ces 4 actuateurs permet alors, en régime établi, de délivrer une tension continue de plusieurs centaines de volts. Etant donné que ces actuateurs sont montés en série, la tension continue mesurée en sortie du convertisseur, au moyen d'un circuit de mesure comprenant un voltmètre 20 et une résistance 19 montés en parallèle, peut atteindre une tension supérieure à 1 KV.

Les actuateurs piézoélectriques utilisés dans le convertisseur sont de type haute tension, c'est-à-dire constitués d'un empilement de disques de céramique PZT (acronymes pour titano-zirconate de plomb). Les disques de céramiques, d'épaisseur comprise entre 0,4 et 1 mm, sont séparés par des électrodes métalliques fines. Ces actuateurs peuvent résister à de hautes pressions pouvant aller jusqu'à au moins 100kN. Lorsqu'on soumet certains matériaux non conducteurs à une contrainte mécanique, un champ électrique apparait entre les deux faces. Cet effet est appelé la piézoélectricité directe. Le champ électrique est créé par la séparation, suite à la déformation, des centres de charges négatives et positives.

D'un point de vue électrique, un actuateur piézoélectrique se comporte comme un condensateur. Ainsi, sans rechargement, la tension mesurée en sortie d'un actuateur décroit invariablement. Par conséquent, pour que le convertisseur puisse fonctionner correctement, comme un générateur de courant continu, avec une puissance satisfaisante, c'est-à-dire au moins égale à 300W en sortie de chaque actuateur, il est nécessaire de faire subir aux actuateurs piézoélectriques des cycles de charges et de décharges alternées à haute fréquence. En effet, lorsqu'un actuateur piézoélectrique subit un champ électrique variable dans le temps, il se met à vibrer avec la même fréquence que celui-ci. Pour certaines fréquences bien déterminées, l'actuateur piézoélectrique entre en résonance. Sa déformation, de quelques micromètres est alors plus grande que sa déformation statique. Le déplacement Il qu'il subit, exprimé en m, est estimé par l'équation suivante : ΔL ≈d33 * n * U, où d33 représente le coefficient de déformation dans la direction de polarisation et est exprimé en m/V, n représente le nombre de disques céramiques de l'empilement, et U représente la tension de fonctionnement exprimée en V. Les vibrations d'un actuateur, qui se traduisent par une alternance de compressions et d'allongements, sont donc fonction notamment de l'intensité du champ électrique appliqué, de la longueur de l'actuateur, de la pression appliquée sur l'actuateur et des propriétés du matériau céramique de l'actuateur.

Pour pouvoir faire subir les cycles de charge et décharges haute fréquence aux actuateurs piézoélectriques 17 du convertisseur 10, le circuit de mesure, tel que représenté sur le schéma de la figure 3, comprend en outre un interrupteur électronique 21, se présentant sous la forme d'un transistor par exemple, et fonctionnant comme un hacheur haute fréquence. Cet interrupteur permet ainsi alternativement d'ouvrir et de fermer le circuit électrique de mesure en sortie du convertisseur. Ainsi, lorsque le circuit électrique est fermé, le courant passe dans une résistance 19, les actuateurs piézoélectriques 17 se déchargent et subissent un allongement. La valeur minimale de la résistance 19 peut être quasiment à 0 ohm, mais dans ce cas la décharge des actuateurs est lente. Plus la résistance est élevée, plus la décharge des actuateurs est rapide. En revanche, lorsque le circuit électrique est ouvert, les actuateurs 17 se chargent et subissent alors une compression. Ces compressions / allongements alternés se produisent à la surface des actuateurs 17. L'interrupteur électronique 21 agissant comme un hacheur haute fréquence, ces compressions / allongements alternés se produisent de manière très rapide, si bien qu'ils entrainent des vibrations à la surface des actuateurs 17, cette surface vibrante devant en outre rester en contact permanent avec le deuxième piston 14 du vérin hydraulique 11. Les vibrations sont de l'ordre de quelques dizaines de µm. Grâce à ces cycles alternés de charge/décharge des actuateurs 17, la puissance délivrée par chaque actuateur d'un convertisseur, mesurée avec un wattmètre 22 à la sortie du convertisseur, devient suffisamment grande, c'est-à dire supérieure à 300W par actuateur.

Ce processus est rendu possible, à la différence des condensateurs, grâce à l'effet piézoélectrique qui est responsable des compressions et allongements alternés que subissent les actuateurs.

Les actuateurs peuvent en outre être utilisés en dynamique sur une plage de fréquences assez large, jusqu'à leur fréquence de résonnance. Ainsi, un actuateur piézoélectrique résonnant à 20KHz, peut par exemple être utilisé sur une plage de fréquences comprise entre 10 et 20KHz.

Il est par ailleurs à noter qu'à partir de 20KHz, les fréquences ne sont plus audibles. Par conséquent, le fait d'utiliser des actuateurs résonnants à des fréquences supérieures à 20 KHz présente l'avantage de ne pas provoquer de nuisances sonores.

Dans un exemple, un convertisseur 10 comprend des actuateurs 17 haute puissance, résonnant à plus de 20 Khz, par exemple de type P-88 PICMA commercialisé par la société PI, un hacheur 21 présentant une fréquence de coupure de 20 Khz, et une masse 15 dont le poids permet d'appliquer une pression permanente de 1000N sur chaque actuateur 17. Dans ce cas, les vibrations de chaque actuateur entrainent un déplacement moyen, pour chaque actuateur, de l'ordre de 20 µm à l'interface piston/actuateur, et une puissance électrique continue maximale de l'ordre de 400 W peut être délivrée par chaque actuateur. L'effet piézoélectrique direct rend compte de très faibles pertes énergétiques. Le fonctionnement du convertisseur est alors analogue à celui d'un générateur à courant continu, de type dynamo, à la différence majeure qu'aucune énergie mécanique extérieure au convertisseur n'est nécessaire.

Il est à noter que les surfaces planes de contact du deuxième piston 14 du vérin 11 et des actuateurs 17 doivent être en contact permanent. Ce contact permanent à l'interface piston / actuateur doit être le plus parfait possible car la compression n'induit pas de déformations supérieures à 50 µm en général. Cela exige en particulier un alignement parfait. D'autre part, un fonctionnement dynamique avec un léger déphasage d'un actuateur à l'autre pourrait nuire au rendement du convertisseur. Il est possible de pallier à ces difficultés en associant un vérin 11 par actuateur 17. La course du vérin n'a pas d'importance mais plutôt la force qu'il peut générer sur chaque actuateur. Il n'y a cependant pas de limite inférieure à cette force. En effet, à pression quasi nulle, la tension produite est quasi nulle. Si le contact entre le piston du vérin et l'actuateur piézoélectrique est parfait, une force de quelques newtons seulement induit une tension de quelques volts. Par contre, il existe une force de compression maximale à ne pas dépasser. Cette force maximale dépend de chaque actuateur et, d'une manière proportionnelle, de la surface de contact. Cette force maximale est cependant très élevée. Pour un actuateur standard elle est de l'ordre de quelques centaines de KN. Si une telle force devait être atteinte, il suffirait alors, pour la réduire, d'augmenter la surface de contact piston /actuateur.

Les actuateurs piézoélectriques 17 sont en général disposés dans des boitiers. Le corps 11 du vérin hydraulique est de préférence fixé à ces boitiers. Cette fixation peut par exemple être réalisée au moyen d'un système de vis et d'écrou 16, ou de tout autre moyen équivalent.

Un tel convertisseur présente l'avantage d'être peu encombrant. Ainsi, dans l'exemple donné d'un convertisseur comprenant 4 actuateurs piézoélectriques, l'encombrement correspond à un cube de 10 cm de côté. Ce convertisseur est en outre simple à réaliser, et est peu onéreux.

Une centrale de production d'énergie électrique permettant de produire une tension de plusieurs milliers de volts, consiste alors à monter en série plusieurs convertisseurs électromécaniques tels que décrits ci-dessus. Ainsi, par exemple une centrale d'une surface de 1 m² seulement peut contenir une centaine de convertisseurs à 4 actuateurs tels que décrits ci-dessus. Une telle centrale permet alors de produire une énergie électrique avec une tension continue de l'ordre de 100 000V et avec une puissance de l'ordre de 160000 W. Dans ce cas, l'énergie électrique est produite par la centrale avec un ampérage de 1,6 A, compatible avec le transport de l'énergie produite sur de longues distances, afin de pouvoir alimenter des villes éloignées par exemple. Selon la taille du convertisseur, c'est-à-dire selon le nombre et la taille des actuateurs piézoélectriques utilisés, selon la masse, selon le nombre et la taille des vérins utilisés, il est possible de mettre plus ou moins de convertisseurs sur une surface de 1 m². Ainsi, si le convertisseur ne fait que 5 cm de côté, il est possible de disposer 20*20 = 400 convertisseurs sur une telle surface.

Selon l'utilisation envisagée pour une telle centrale, c'est-à-dire selon les besoins en énergie à sa sortie, on intègre alors plus ou moins de convertisseurs électromécaniques, eux-mêmes comprenant plus ou moins d'actuateurs piézoélectriques. Il est évident qu'une centrale utilisée par un seul particulier n'aura pas les mêmes besoins en énergie qu'une centrale destinée à alimenter un quartier, une ville ou une usine par exemple. Selon l'utilisation envisagée pour la centrale, celle-ci peut donc comprendre au moins 10 convertisseurs montés en série, les convertisseurs comprenant eux-mêmes au moins un actuateur piézoélectrique, afin de délivrer une tension continue avec une puissance en sortie au moins égale à 3000 W.

Lorsque la centrale est prévue pour produire de l'énergie à très haute tension, en vue d'être transportée sur de longues distances puis distribuée dans des villes éloignées, il est en outre envisageable d'utiliser des gros actuateurs de plusieurs dizaines de cm² de section. Dans ce cas, les vérins hydrauliques peuvent avantageusement être remplacés par des presses hydrauliques qui permettent d'appliquer une pression permanente de plusieurs tonnes sur les actuateurs. Dans ce cas, les dimensions des convertisseurs et de la centrale changent, mais pas le principe de fonctionnement.

De préférence, la centrale est en outre reliée à au moins un onduleur afin de transformer le courant continu produit en courant alternatif. Au moins un transformateur peut en outre être disposé en aval de l'onduleur afin de transformer les valeurs de tension et d'intensité du courant produit.

Le convertisseur électromécanique décrit permet de produire de l'électricité sans requérir aucune énergie cinétique extérieure. Seule la force du poids de la masse 15, appliquée sur le dispositif de pression mécanique agit sur les actuateurs piézoélectriques. Une centrale de production d'énergie électrique comprenant ces convertisseurs présente l'avantage d'être de très faible encombrement, si bien qu'elle peut être installée n'importe où. Elle permet de produire des hautes tensions électriques destinées à être utilisées à des fins industrielles ou domestiques et qui peuvent en outre être transportées sur de longues distances pour assurer une distribution d'énergie sur des sites éloignés.

Le convertisseur qui vient d'être décrit est simple à réaliser industriellement; car il comprend principalement un actuateur piézoélectrique sur lequel est appliquée une pression statique permanente. A cette fin et avantageusement, l'actuateur piézoélectrique est associé à au moins un vérin et présente un mode de fonctionnement simple, l'ensemble n'étant ni décrit ni suggéré dans l'état de la technique. Le principe de fonctionnement est basé principalement sur l'effet piézoélectrique. Il peut aussi prendre en compte la présence de la force de Maxwell qui a un effet substantiel pour de très fortes contraintes mécaniques. Dans ce cas, la force de Maxwell qui tend toujours à détendre l'actuateur alors que celui-ci est toujours compressé dans le mode de fonctionnement proposé peut avoir comme effet de permettre d'entretenir le mouvement vibratoire sur une plus longue durée et ainsi d'améliorer considérablement le rendement. Il n'est substantiel que pour d'importantes forces comme c'est le cas pour les applications courantes des actuateurs piézoélectriques en mode actionneur (plusieurs centaines de kiloforces (kiloNewton), des actionneurs piézoélectrique actuellement commercialisés produisent des forces de plusieurs milliers de newton). L'effet de la force de Maxwell va dans le sens de la constatation pratique bien connue qu'un actuateur parait moins raide en circuit fermé qu'en circuit ouvert. Cela contribue à combattre les forces de frottements qui s'opposent au mouvement.

On rappelle qu'il s'agit de faire vibrer l'actuateur le plus longtemps possible lorsqu'un poids (une force) est appliqué subitement sur le vérin. Lorsque le système est lancé il est entretenu le plus longtemps possible par l'interrupteur électronique. Apres application de la force, pendant son fonctionnement, le convertisseur ne nécessite pas d'énergie cinétique extérieure, seul le travail initial de compression du poids est exploité quand il est appliqué sur le vérin (conversion de son énergie potentielle).

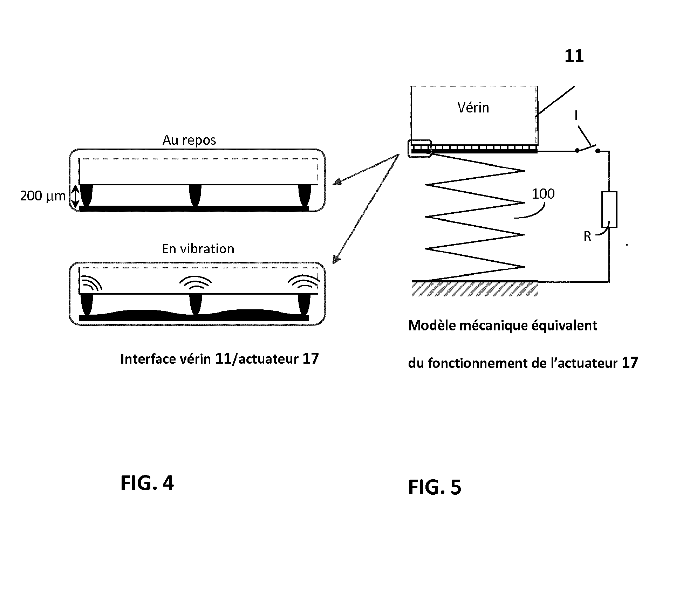

En outre, l'interface à un rôle saturant car elle limite l'amplitude des vibrations et est la cause de déperditions acoustiques de contact. Pour pallier à cela et toujours à des fins de rendement, le contact à l'interface vérin/actuateur est de préférence multi-ponctuels et de type sphère-plan, comme illustré par le schéma de l'interface multipoints vérin /actuateur au repos et en phase de vibration de la figure 4 et le schéma de la figure 5 qui représente le modèle mécanique équivalent du fonctionnement de l'actuateur, la référence 100 représentant un ressort, I étant un interrupteur et R une résistance.

A titre d'exemple, les applications de la présente invention concernent la réalisation de source d'énergie électrique.

Selon un exemple particulièrement avantageux, l'invention peut être mise en oeuvre dans tout type de système tournant où le travail du poids que subit l'élément tournant, est ici exploité afin d'appliquer une masse sur les vérins. Dans le cas d'une roue de véhicule, la force du poids de la masse est réalisée par l'effet dû au méplat du contact roue/sol ; méplats des roues sur lesquels repose tout le poids du véhicule. Les convertisseurs fixés par une seule de leur extrémité à la gente, se contractent via le piston de leur vérin sous l'effet dû au méplat du contact roue/sol : lorsque la roue tourne (véhicule en mouvement), chaque convertisseur situé perpendiculairement au méplat que forme la roue avec la surface du sol, se contracte. Le méplat est le résultat de la déformation que subit le pneu de la roue au contact de la route sous l'effet du poids du véhicule. L'énergie potentielle de la masse pesante du véhicule est mise à profit alors que son énergie cinétique de déplacement n'implique que sa masse inerte.

On pourra, par exemple, fixer plusieurs convertisseurs sur une roue de voiture ou de train, ou encore au niveau du moyeu d'une éolienne.

En outre, le mode de fonctionnement en circuit alternativement fermé et ouvert à haute fréquence et sous fortes contraintes appliquées engendre un rendement supérieur à 0.9.

En effet, lorsqu'une voiture roule, les convertisseurs en vis-à-vis de la surface de contact qui subit une force de 20 KN environ pour une voiture de 2 000 kg, sont subitement compressés puis décompressés avec le mouvement de la roue. Pour une vitesse de déplacement de 60 km/h et ramené à un seul convertisseur cela fait une fréquence de compression/décompression de l'ordre de 500 Hz environ suivant le nombre de convertisseurs implémentés. Pour une déformation moyenne des pneus au contact de la route de 1 cm, cela fait une puissance mécanique potentielle exploitable de l'ordre de 400 KW. Même avec un rendement très mauvais de 0.5 cela fait une puissance électrique produite moyenne continue de 200 KW mais, avec le fonctionnement du convertisseur selon la présente invention, le rendement peut approcher 0.95 ce qui se produit lorsque le convertisseur comporte un interrupteur électronique fonctionnant en mode hacheur haute fréquence.

Ces chiffres sont indicatifs car la démultiplication du vérin est réglable en fonction de la déformation.

## Revendications

1. Convertisseur (10) électromécanique apte à produire de l'électricité, **caractérisé en ce qu'**il comprend au moins un actuateur piézoélectrique (17) à la surface duquel est appliquée une pression statique permanente.

2. Convertisseur selon la revendication 1, **caractérisé en ce qu'**il comprend en outre au moins un dispositif de pression mécanique (11, 15), apte à appliquer ladite pression statique permanente sur ledit au moins un actuateur piézoélectrique.

3. Convertisseur selon la revendication 2, **caractérisé en ce que** le dispositif de pression mécanique comporte au moins un vérin hydraulique (11) et au moins une masse, le au moins un vérin hydraulique (11) comprenant un premier piston (12) sur lequel s'appuie la masse (15), et un deuxième piston (14), séparé dudit premier piston (12) par une chambre hydraulique (13), ledit deuxième piston (14) étant apte à appliquer ladite pression statique permanente sur la surface dudit au moins un actuateur (17), du fait de la force du poids de la masse (15) appliquée sur ledit premier piston (12) et transmise audit deuxième piston (14) via ladite chambre hydraulique.

4. Convertisseur selon la revendication 3, **caractérisé en ce que** ledit deuxième piston (14) dudit vérin hydraulique (11) présente une surface de section droite plus grande que la surface de la section droite du premier piston (12) afin de démultiplier la force du poids de la masse (15) appliquée sur ledit premier piston (12).

5. Convertisseur selon l'une des revendications 2 à 4, **caractérisé en ce que** le poids de la masse (15) appliquée sur ledit premier piston (12) est de l'ordre de quelques kilogrammes, et de préférence compris entre 1 et 8 kg.

6. Convertisseur selon l'une quelconque des revendications précédentes, **caractérisé en ce qu'**il comporte plusieurs actuateurs (17) et **en ce que** ces actuateurs sont montés en série.

7. Convertisseur selon l'une quelconque des revendications précédentes, **caractérisé en ce qu'**il comprend un actuateur (17) piézoélectrique par vérin (11) hydraulique.

8. Convertisseur selon l'une quelconque des revendications précédentes, **caractérisé en ce qu'**il comprend en outre un circuit de mesure apte à mesurer la tension ou la puissance produite en sortie du convertisseur.

9. Convertisseur selon la revendication 8, **caractérisé en ce que** le circuit de mesure comprend en outre un interrupteur électronique (21) fonctionnant en mode hacheur haute fréquence, de manière à engendrer des vibrations de la surface dudit au moins un actuateur (17) en contact avec ledit deuxième piston (14) dudit au moins un vérin hydraulique (11) et à obtenir une puissance électrique en sortie dudit au moins un actuateur (17) au moins égale à 300W.

10. Centrale de production d'énergie électrique ou source d'énergie électrique, comprenant au moins 10 convertisseurs selon l'une des revendications 1 à 9, montés en série, afin de délivrer un courant continu avec une puissance d'au moins 3000 W.

11. Système tournant comme une roue de voiture ou de train, ou encore un moyeu d'éolienne, comportant un ou plusieurs convertisseurs selon l'une quelconque des revendications 1 à 9.
